# EUROPÄISCHE PATENTSCHRIFT

(11) **EP 0 751 595 B1**
(45) Veröffentlichungstag und Bekanntmachung des Hinweises auf die Patenterteilung: **15.03.2000**
(21) Anmeldenummer: 96113508.4
(22) Anmeldetag: 21.10.1994
(51) Int. Cl.: H02B 1/30, H02B 1/01

(54) **Rahmengestell für einen Schaltschrank**
Frame for a switchgear cabinet
Bâti pour une armoire de commutation

(30) Priorität: 25.10.1993 DE 4336285
(43) Veröffentlichungstag der Anmeldung: 02.01.1997
(62) Teilanmeldung aus: 94930968.6
(73) Patentinhaber: Rittal-Werk Rudolf Loh GmbH & Co. KG, 35745 Herborn (DE)
(72) Erfinder: Besserer, Horst, 35745 Herborn (DE); Münch, Udo, 35764 Sinn (DE); Neuhof, Markus, 35630 Ehringshausen (DE); Nicolai, Walter, 35745 Herborn (DE); Pawlowski, Adam, 35690 Dillenburg (DE); Schüler, Matthias, 35716 Dietzhölztal (DE); Strackbein, Heinrich, 35444 Biebertal (DE)
(74) Vertreter: Fleck, Hermann-Josef, Dr.-Ing.

(56) Entgegenhaltungen:
- EP-A- 0 402 276
- DE-U- 9 116 634
- FR-A- 2 669 473
- FR-A- 2 681 402
- US-A- 4 610 561

## Beschreibung

Die Erfindung betrifft ein Rahmengestell für einen Schaltschrank, das aus Rahmenschenkel zusammengesetzbar oder zusammengesetzt ist, wobei zumindest die vertikallen Rahmenschenkel dem Innenraum des Rahmengestelles zugekehrte Reihen von Befestigungsaufnahmen aufweisen, wobei vier Reihen von Befestigungsaufnahmen dem Innenraum zugekehrt sind.

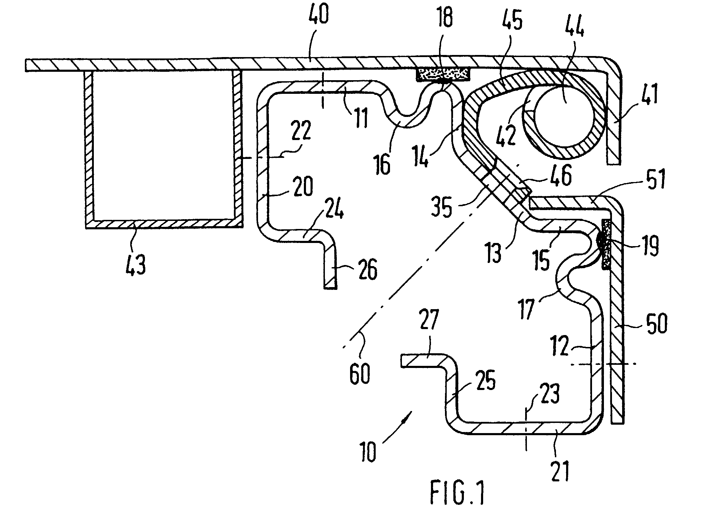

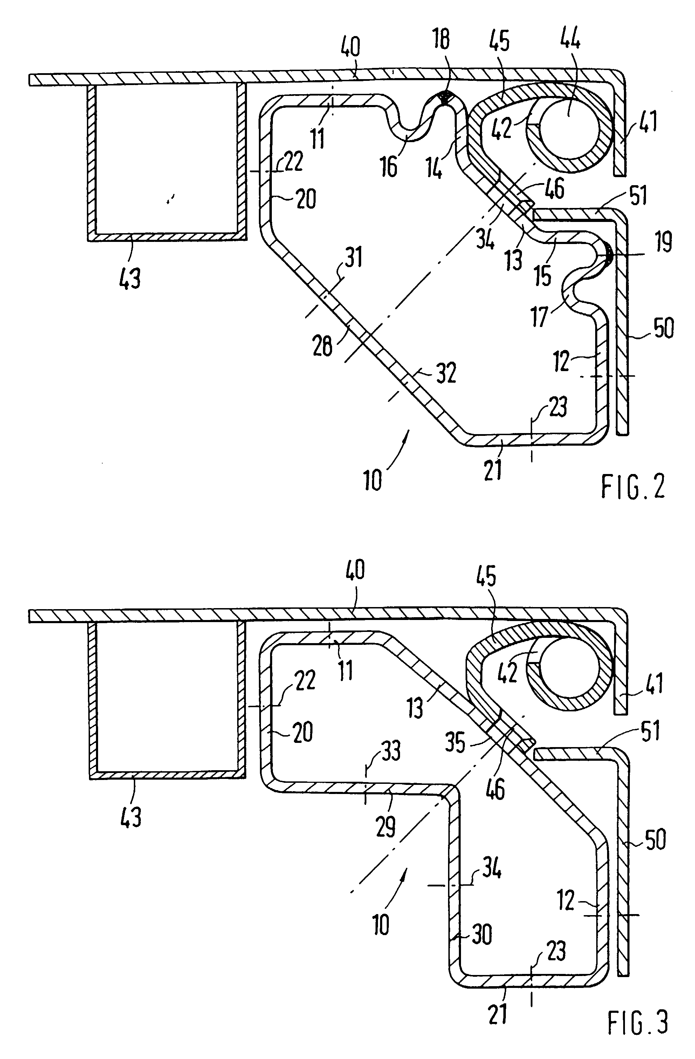

Ein solches Rahmengestell ist aus der US 4,610,561 bekannt. In diesem Dokument ist ein Rahmengestell für einen Schaltschrank gezeigt. Das Rahmengestell ist aus zwölf querschnittsgleichen Rahmenschenkeln zusammengesetzt, die in den Rahmengestell-Eckbereichen mit Eckverbindern verbunden sind. Die Rahmenschenkel weisen zwei zueinander senkrecht stehende Profilaußenseiten auf, von denen jeweils ein Schenkel rechtwinklig dem Schaltschrank-Innenraum zugekehrt abgewinkelt ist. Die Schenkel tragen wiederum Endabschnitte, die paralell zu den Profilaußenseiten ausgerichtet sind. In die einzelnen Schenkel ist jeweils eine Reihe von Befestigungsaufnahmen eingearbeitet, die vorliegend als Gewindeaufnahmen ausgebildet sind. Wie Fig. 1 und 2 der UA 4,610,561 erkennen lassen, sind die Endabschnitte an den stirnseitigen Enden der Rahmenschenkel mit jeweils einem geschlossenen und einem geöffneten schlitzförmigen Durchbruch versehen. An den Gewindeaufnahmen der Schenkel können Anbauten befestigt werden. Beim Bestücken von Schaltschränken ist es häufig erforderlich, daß in einer vorbestimmten Höhe mehrere Einbauten im Schaltschrank-Innenraum festgelegt werden. Dies ist mit dem aus der US 4,610,561 bekannten Rahmenschenkel nicht ohne weiteres möglich. Wenn beispielsweise eine Seitenwand an den Befestigungsaufnahmen der Schenkel angeschraubt ist, so kann an dieser Stelle kein Einbau mehr fixiert werden.

Die EP 0 402 276 zeigt einen Rahmenschenkel für das Rahmengestell eines Schaltschrankes, der zwei dem Innenraum des Schaltschrankes zugekehrte Profilseiten aufweist, welche zueinander im rechten Winkel stehen. Diese beiden Profilseiten sind jeweils mit einer Reihe von Befestigungsaufnahmen versehen, welche dem Innenraum des Schaltschrankes zugekehrt ist. Die beiden Profilseiten bilden eine, dem Schaltschrank-Innenraum zugekehrte Innenkante. Im Bereich der Befestigungsaufnahmen ist diese Innenkante mit Ausnehmungen versehen. Durch diese Ausnehmungen hindurch können Käfigmuttern in den von dem Rahmenschenkel umschlossenen Innenraum eingesetzt werden. Die Gewindeaufnahmen dieser Käfigmuttern stehen dann in Flucht zu den Befestigungsaufnahmen. Dies ermöglicht dann die Befestigung von Einbauten im Schaltschrank-Innenraum. Hierzu werden Befestigungsschrauben durch die Befestigungsaufnahmen hindurchgeführt und in die Gewindeaufnahmen der Käfigmuttern eingeschraubt. Die Befestigungsmöglichkeiten sind auch bei solchen Rahmenschenkeln sehr eingeschränkt.

Aus der DE 91 16 634 sind weitere Hohlprofile für einen Schaltschrank bekannt. Dabei sind ähnlich wie bei der EP 0 402 276 zwei Profilseiten dem Innenraum des Schaltschrankes zugekehrt, die unter Bildung einer Innenkante aneinanderstoßen. Die beiden Profilseiten sind jeweils mit einer Reihe von Befestigungsaufnahmen versehen, die dem Schaltschrank-Innenraum zugekehrt ist. Die Befestigungsaufnahmen jeweils einer Reihe sind wechselweise als kreisförmige und quadratische Durchbrüche ausgestaltet. Einige Befestigungsaufnahmen sind in Schenkel eingebracht, die von den Profilseiten abgebogen und der Schaltschrank-Außenseite zugekehrt sind. An diesen Befesitgungsaufnahmen können Seitenwände angeschraubt werden. Auch bei diesem Rahmenschenkel sind die Anbringungsmöglichkeiten für Einbauten im Inneraum des Schaltschrankes begrenzt.

Es ist Aufgabe der Erfindung, ein Rahmengestell der eingangs erwähnten Art zu schaffen, das eine kompakte Bestückung des Schaltschranke-Innenraumes ermöglicht.

Mit den vier Reihen von Befestigungsaufnahmen wird eine Vielzahl von Anbringungsmöglichkeiten für Einbauten geschaffen. Diese können damit in unterschiedlichsten Einbaustellungen im Innenraum des Rahmengestelles montiert werden. Insbesondere lassen sich in einer vorgegebenen Höhenposition gleichzeitig mehrere Einbauten an einem Rahmenschenkel anbringen.

Ist nach einer weiteren Ausgestaltung vorgesehen, daß die Verbindungsabschnitte über einen konvex nach außen gewölbten, einen Dichtungssteg bildenden Dichtungsabschnitt und einen anschließenden, konvex nach innen gewölbten, eine nutartige Dichtungsaufnahme bildenden Aufnahmeabschnitt in die Profilseitenabschnitte übergehen, dann kann mit Dichtungselementen an den Schranktüren und den Wandelementen oder in den Dichtungsaufnahmen der Rahmenschenkel ein dichter Abschluß des Rahmengestelles erreicht werden.

Nach einer Ausgestaltung ist vorgesehen, daß die Rahmenschenkel als offenes, zur Diagonale symmetrisches Hohlprofil ausgebildet sind, wobei bevorzugt zur Stabilitätserhöhung des Rahmenschenkels vorgesehen ist, daß die dem Übergangsabschnitt abgekehrten Enden der Profilseitenabschnitte in zwei rechtwinklig nach innen und einen rechtwinklig nach außen abgebogenen Endabschnitt auslaufen, wobei die nach außen abgebogenen Endabschnitte im gleichen Abstand zur Diagonale enden.

Die Rahmenschenkel können jedoch auch als geschlossenes, zur Diagonale symmetrisches Profil ausgebildet sein. Dabei kann zum einen vorgesehen sein, daß die dem Übergangsabschnitt abgekehrten Enden der Profilseitenabschnitte über jeweils einen rechtwinklig nach innen gebogenen Endabschnitt und einen diese verbindenden Verbindungsabschnitt miteinander verbunden sind und zum anderen, daß die dem Übergangsabschnitt abgekehrten Ende der Profilseitenabschnitte über jeweils zwei rechtwinklig nach innen abgebogene Endabschnitte miteinander verbunden sind.

Zur Vereinfachung des Profils kann auch vorgesehen sein, daß der Übergangsabschnitt direkt in die Profilseitenabschnitte übergeht. Dann werden die Profilseitenabschnitte selbst mit in die Abdichtung des Schaltschrankes einbezogen.

Um Einbaumöglichkeiten für Einbauten zu schaffen, sieht eine Ausgestaltung vor, daß die Endabschnitte und/oder der Verbindungsabschnitt mit Reihen von Befestigungsaufnahmen versehen sind.

Damit an die Rahmenschenkel auf einfache Weise Scharnier- und Schließelemente angebracht werden können, ist auch der Übergangsabschnitt mit Befestigungsaufnahmen versehen.

Die Erfindung wird anhand von in den Zeichnungen jeweils im Teilschnitt dargestellten Ausführungsbeispielen näher erläutert. Es zeigen:
- Fig. 1: im Querschnitt einen als offenes Hohlprofil ausgebildeten Rahmenschenkel mit der Scharnierseite einer Schranktür und einem Wandelement,
- Fig. 2: im Querschnitt denselben Eckbereich eines Schaltschrankes mit einem als geschlossenes Hohlprofil ausgebildeten Rahmenschenkel und
- Fig. 3: im Querschnitt denselben Eckbereich eines Schaltschrankes mit einem anderen, als geschlossenes Hohlprofil ausgebildeten Rahmenschenkel.

In Fig. 1 ist ein vertikaler Rahmenschenkel 10 eines Rahmengestelles gezeigt, der mit seinen äußeren Profilseitenabschnitten 11 und 12 parallel zu den senkrecht zueinander stehenden Seiten des Schaltschrankes ausgerichtet ist. Diese beiden Profilseitenabschnitte 11 und 12 sind über den Übergangsabschnitt 13 miteinander verbunden, welcher senkrecht zu der Diagonalen 60 zwischen den beiden Profilseitenabschnitten 11 und 12 verläuft. Damit wird keine Außeneckkante, sondern ein Aufnahmeraum mit einem etwa dreieckförmigen Querschnitt geschaffen, in dem Scharnierelemente 45 oder Schließelemente von Schranktüren 40 Platz finden. Die Schranktür 40 ist mit einem abgekanteten Rand 41 versehen. In den Eckbereichen der Schranktür 40 sind Scharnierhülsen 42 als Scharnierelemente angebracht, die mit ihren Aufnahmen 44 mit den Aufnahmen der Scharnierelemente 45, die an dem Übergangsabschnitt 13 des Rahmenschenkels 10 angebracht sind, fluchten und Scharnierbolzen aufnehmen. Das Scharnierelement 45 weist Befestigungsaufnahmen 46 auf, über die es an dem Übergangsabschnitt 13 angeschraubt werden kann, der mit entsprechenden Befestigungsaufnahmen 35 versehen ist. An dem Profilseitenabschnitt 12 kann ein mit Rand 51 versehenes Wandelement 50 angebracht werden, welches in an sich bekannter Weise mit dem Profilabschnitt 12 verschraubt werden kann, wie die angedeutete Verbindungslinie zeigt. Die Schranktür 40 kann auf der Innenseite mit einem Rahmen 43 versteift sein.

Der Übergangsabschnitt 13 geht bei dem Rahmenschenkel 10 nach Fig. 1 über zwei Verbindungsabschnitte 14 und 15, die senkrecht zu den Profilseitenabschnitten 11 und 12 stehen, in diese über, wobei sich jeweils ein konvex nach innen gewölbter Aufnahmeabschnitt 16 bzw. 17 anschließt. Mit Hilfe der Dichtungsabschnitte 18 und 19 kann mit einem an der Schranktür 40 angebrachten Dichtungselement und einem an dem Wandelement 50 angebrachten Dichtungselement ein dichter Abschluß erreicht werden.

In die Aufnahmeabschnitte 16 und 17 kann auch je ein Dichtungselement eingelegt werden.

An die dem Übergangsabschnitt 13 abgekehrten Enden der Profilseitenabschnitte 11 und 12 schließen sich jeweils zwei nach innen abgebogene Endabschnitte 20 und 24 bzw. 21 und 25 und ein nach außen abgebogener Endabschnitt 26 bzw. 27 an. Diese Endabschnitte versteifen den als offenes Hohlprofil ausgebildeten Rahmenschenkel 10, wobei in die Endabschnitte 20 und 21 Reihen von Befestigungsaufnahmen 22 und 23 eingebracht sind, über die Einbauten am Rahmengestell befestigt werden können. Der Rahmenschenkel 10 ist symmetrisch zu der Diagonalen 60 aufgebaut und erlaubt mit der freigesparten Außeneckkante ein einfaches Anlenken der Schranktür 40, da genügend Raum zur Unterbringung der Scharnierelemente 45 und von Schließelementen auf der Schließseite der Schranktür 40 vorhanden ist. Da das Profil des Rahmenschenkels 10 zur Diagonale 60 symmetrisch ist, können an dem Rahmenschenkel 10 die Schranktür 40 und das Wandelement 50 auch vertauscht angebracht werden. Es ist lediglich das Scharnierelement 45 bzw. das Schließelement um 180° verdreht am Rahmenschenkel 10 anzubringen. Auf diese Weise kann am Schaltschrank die Vorder- und/oder Rückseite mit einer Schranktür 40 verschlossen werden oder es können Schranktüren 40 an der einen und/oder anderen Seite des Schaltschrankes angebracht werden.

Wie am Ausführungsbeispiel nach Fig. 2 gezeigt ist, können die vertikalen Rahmenschenkel 10 des Rahmengestelles auch als geschlossenes Hohlprofil ausgebildet sein, das wiederum zur Diagonale 60 zwischen den Profilseitenabschnitten 11 und 12 symmetrisch ist. Dabei gehen die dem Übergangsabschnitt 13 abgekehrten Enden der Profilseitenabschnitte 11 und 12 jeweils über einen senkrecht nach innen gebogenen Endabschnitt 20 und 21 in einen Verbindungsabschnitt 28 über, der mit zwei Reihen von Befestigungsaufnahmen 31 und 32 versehen ist.

Die Profilseitenabschnitte 11 und 12 sind mit Befestigungsaufnahmen versehen, um Wandelemente 50 anschrauben zu können. Die Reihen von Befestigungsaufnahmen 22, 23 und 31, 32 in den Endabschnitten 20 und 21 sowie dem Verbindungsabschnitt 28 dienen als Befestigungsmöglichkeiten für Einbauten, Montageschienen und dgl.

Schließlich zeigt Fig. 3 ein weiteres Ausführungsbeispiel eines als geschlossenes Hohlprofil ausgebildeten Rahmenschenkels 10, bei dem der Übergangsabschnitt 13 direkt in die Profilseitenabschnitte 11 und 12 übergeht und bei dem die Endabschnitte 20 und 21 noch einmal nach innen abgebogen sind und mit den Endabschnitten 29 und 30 das Profil schließen. Dabei können auch die rechtwinklig zueinander stehenden Endabschnitte 29 und 30 mit Reihen von Befestigungsaufnahmen 33 und 34 versehen sein, wobei diese Endabschnitte 29 und 30 eine Aufnahme bilden, in die ein zusätzliches Profil eingesetzt und mit dem Rahmenschenkel 10 verbunden werden kann.

In allen Ausführungsbeispielen kann die Schranktür 40 und das Wandelement 50 vertauscht am Rahmenschenkel 10 angebracht werden und anstelle der Scharnierseite der Schranktür 40 kann auch die Schließseite der Schranktür 40 dem Rahmenschenkel 10 zugekehrt sein, wobei anstelle von Scharnierelementen 45 Schließelemente am Rahmengestell befestigt sind.

## Patentansprüche

1. Rahmengestell für einen Schaltschrank, das aus Rahmenschenkel (10) zusammengesetzbar oder zusammengesetzt ist, wobei zumindest die vertikallen Rahmenschenkel (10) dem Innenraum des Rahmengestelles zugekehrte Reihen von Befestigungsaufnahmen (22,23, 33,34, 31,32) aufweisen, wobei vier Reihen von Befestigungsaufnahmen (22,23, 33,34 31,32) dem Innenraum zugekehrt sind,
dadurch gekennzeichnet,
daß zumindest die vertikalen Rahmenschenkel (10) zwei von den angrenzenden beiden Außenseiten des Rahmengestelles zugekehrte Profilseitenabschnitte (11, 12) aufweisen, die im gemeinsamen Eckbereich ineinander übergehen,
daß die Rahmenschenkel (10) zwei vertikal zu den Außenseiten des Rahmengestelles nach innen ausgerichtete Endabschnitte (20,21) und zwei weitere Endabschnitte (29,30) aufweisen, die paralell zu den Außenseiten ausgerichtet sind, und
daß die Endabschnitte (20,21, 39,30) jeweils mindestens eine Reihe von Befestigungsaufnahmen (22,23, 33,34, 31,32) aufweisen.

2. Rahmengestell nach Anspruch 1,
dadurch gekennzeichnet,
daß der Übergangsabschnitt (13) senkrecht zur Diagonale (60) zwischen den beiden Profilseitenabschnitten (11,12) steht.

3. Rahmengestell nach Anspruch 2,
dadurch gekennzeichnet,
daß der Übergangsabschnitt (13) selbst über zwei senkrecht zu dem zugeordneten Profilseitenabschnitt (11,12) stehende Verbindungsabschnitte (14,15) übergeht.

4. Rahmengestell nach Anspruch 2 oder 3,
dadurch gekennzeichnet,
daß die Verbindungsabschnitte (14,15) über einen konvex nach außen gewölbten, einen Dichtungssteg bildenden Dichtungsabschnitt (18,19) und einen anschließenden, konvex nach innen gewölbten, eine nutartige Dichtungsaufnahme bildenden Aufnahmeabschnitt (16,17) in die Profilseitenabschnitte (11,12) übergehen.

5. Rahmengestell nach einem der Ansprüche 1 bis 4,
dadurch gekennzeichnet,
daß die Rahmenschenkel (10) als offenes, zur Diagonale (60) symmetrisches Hohlprofil ausgebildet sind.

6. Rahmengestell nach einem der Ansprüche 1 bis 5,
dadurch gekennzeichnet,
daß die dem Übergangsabschnitt (13) abgekehrten Enden der Profilseitenabschnitte (11,12) in zwei rechtwinklig nach innen und einen rechtwinklig nach außen abgebogenen Endabschnitte (20,21; 24,25; 26,27) auslaufen, wobei die nach außen abgebogenen Endabschnitte (26,27) im gleichen Abstand zur Diagonale (60) enden (Fig. 1).

7. Rahmengestell nach einem der Ansprüche 1 bis 4,
dadurch gekennzeichnet,
daß die Rahmenschenkel (10) als geschlossenes, zur Diagonale (60) symmetrisches Hohlprofil ausgebildet sind.

8. Rahmengestell nach Anspruch 7,
dadurch gekennzeichnet,
daß die dem Übergangsabschnitt (13) abgekehrten Enden der Profilseitenabschnitte (11,12) über jeweils einen rechtwinklig nach innen gebogenen Endabschnitt (20,21) und einen diese verbindenden Verbindungsabschnitt (28) miteinander verbunden sind.

9. Rahmengestell nach Anspruch 1, 3 oder 7,
dadurch gekennzeichnet,
daß der Übergangsabschnitt (13) direkt in die Profilseitenabschnitte (11,12) übergeht.

10. Rahmengestell nach Anspruch 1, 3, 7 oder 9,
dadurch gekennzeichnet,
daß die dem Übergangsabschnitt (13) abgekehrten Enden der Profilseitenabschnitte (11,12) über jeweils zwei rechtwinklig nach innen abgebogene Endabschnitte (20,21; 29,30) miteinander verbunden sind .

11. Rahmengestell nach einem der Ansprüche 1 bis 10,
dadurch gekennzeichnet,
daß die Endabschnitte (20,21; 29,30) und/oder der Verbindungsabschnitt (28) mit Reihen von Befestigungsaufnahmen (22,23; 33,34; 31,32) versehen sind.

12. Rahmengestell nach einem der Ansprüche 1 bis 11,
dadurch gekennzeichnet,
daß die Übergangsabschnitte (13) der Rahmenschenkel (10) mit Befestigungsaufnahmen (34) versehen sind.

## Claims

1. Framework for a switchgear cabinet, which is comprisable or comprised of frame members (10), at least the vertical frame members (10) having rows of mounting recesses (22,23, 33,34, 31,32) facing the interior of the framework, and four rows of mounting recesses (22,23, 33,34, 31,32) facing the interior, characterised in that at least the vertical frame members (10) have two of the adjacent lateral profile portions (11,12) which face both external sides of the framework and extend into each other at the common comer region, in that the frame members (10) have two end portions (20,21), which are orientated inwardly vertically relative to the external sides of the framework, and two additional end portions (29,30), which are orientated parallel to the external sides, and in that the end portions (20,21, 29,30) each have at least one row of mounting recesses (22,23, 33,34, 31,32).

2. Framework according to claim 1, characterised in that the transitional portion (13) lies perpendicular to the diagonal (60) between the two lateral profile portions (11,12).

3. Framework according to claim 2, characterised in that the transitional portion (13) itself extends over two connecting portions (14,15), which lie perpendicular to the associated lateral profile portion (11,12).

4. Framework according to claim 2 or 3, characterised in that the connecting portions (14,15) extend into the lateral profile portions (11,12) via a sealing portion (18,19), which is curved convexly outwardly and forms a sealing web, and via an adjacent receiving portion (16,17), which is curved convexly inwardly and forms a groove-like sealing receiver.

5. Framework according to one of claims 1 to 4, characterised in that the frame members (10) are configured as an open hollow profile, which is symmetrical with the diagonal (60).

6. Framework according to one of claims 1 to 5, characterised in that the ends of the lateral profile portions (11,12), remote from the transitional portion (13), terminate in two end portions (20,21; 24,25), which are bent at right angles inwardly, and in one end portion (26,27), which is bent at right angles outwardly, the outwardly bent end portions (26,27) ending at identical spacings from the diagonal (60) (Fig. 1).

7. Framework according to one of claims 1 to 4, characterised in that the frame members (10) are configured as a closed hollow profile, which is symmetrical with the diagonal (60).

8. Framework according to claim 7, characterised in that the ends of the lateral profile portions (11,12), remote from the transitional portion (13), are interconnected via a respective end portion (20,21), which is bent at right angles inwardly, and via a respective connecting portion (28), which connects said lateral profile portions.

9. Framework according to claim 1, 3 or 7, characterised in that the transitional portion (13) extends directly into the lateral profile portions (11,12).

10. Framework according to claim 1, 3, 7 or 9, characterised in that the ends of the lateral profile portions (11,12), remote from the transitional portion (13), are interconnected via two respective end portions (20,21; 29,30), which are bent at right angles inwardly.

11. Framework according to one of claims 1 to 10, characterised in that the end portions (20,21; 29,30) and/or the connecting portion (28) are provided with rows of mounting recesses (22,23; 33,34; 31,32).

12. Framework according to one of claims 1 to 11, characterised in that the transitional portions (13) of the frame members (10) are provided with mounting recesses (34).

## Revendications

1. Bâti pour une armoire de commutation, bâti oui peut être assemblé ou qui est assemblé à partir de branches d'encadrement (10). où tout au moins les branches d'encadrement verticales (10) présentent des séries de logements de fixation (22,23, 33,34, 31,32) orientées vers l'intérieur du bâti, et où quatre séries de logements de fixation (22, 23, 33, 34, 31, 32) sont orientées vers l'intérieur,
caractérisé
en ce qu'au moins les branches d'encadrement verticales (10) présentent deux tronçons de profilé (11, 12) faisant face aux côtés extérieurs limitrophes du bâti, tronçons qui se raccordent mutuellement dans la zone d'angle commune,
en ce que les branches d'encadrement (10) présentent deux tronçons terminaux (20, 21) perpendiculaires aux côtés extérieurs du bâti et dirigés vers l'intérieur, et deux autres tronçons terminaux (29, 30) qui sont parallèles aux côtés extérieurs, et
en ce que les tronçons terminaux (20, 21, 29, 30) présentent chacun au moins une série de logements de fixation (22, 23, 33, 34, 31, 32).

2. Bâti suivant la revendication 1,
caractérisé
en ce que le tronçon de transition (13) est perpendiculaire à la diagonale (60) entre les deux tronçons de profilé (11, 12).

3. Bâti suivant la revendication 2,
caractérisé
en ce que le tronçon de transition (13) est lui-même raccordé aux tronçons de profilé associés (11, 12) par l'intermédiaire de deux tronçons de liaison (14, 15) respectivement perpendiculaires au tronçon de profilé (11, 12) associé.

4. Bâti suivant la revendication 2 ou 3,
caractérisé
en ce que les tronçons de liaison (14, 15) se raccordent par l'intermédiaire d'un troncon d'étanchéité (18, 19) à convexité vers l'extérieur, formant une nervure d'étanchéité. auquel est raccordé un tronçon de réception (16. 17) à convexité vers l'intérieur, constituant un logement d'étanchéité en forme de rainure, aux tronçons de profilé (11. 12).

5. Bâti suivant l'une quelconque des revendications de 1 à 4.
caractérisé
en ce que les branches d'encadrement (10) ont la forme de profilés creux ouverts symétriques par rapport à leur diagonale.

6. Bâti suivant l'une quelconque des revendications de 1 à 5.
caractérisé
en ce que les extrémités des tronçons de profilé creux (11, 12) qui ne sont pas orientées vers le tronçon de transition (13) se terminent par deux tronçons terminaux cintrés à angle droit vers l'intérieur (20,21; 24,25) et par un tronçon terminal cintré à angle droit vers l'extérieur (26,27), où les tronçons terminaux cintrés vers l'extérieur (26,27) se terminent à la même distance de la diagonale (60) Fig. 1.

7. Bâti suivant l'une quelconque des revendications de 1 à 4,
caractérisé
en ce que les branches d'encadrement (10) ont la forme d'un profilé creux fermé symétrique par rapport à la diagonale.

8. Bâti suivant la revendication 7,
caractérisé
en ce que les extrémités des tronçons de profilé creux (11, 12) qui sont opposées au tronçon de transition (13) sont chacune raccordées l'une à l'autre par l'intermédiaire d'un tronçon terminal (20, 21) cintré à angle droit vers l'intérieur et par un tronçon de transition (28) qui les relie.

9. Bâti suivant l'une quelconque des revendications 1. 3 ou 7,
caractérisé
en ce que le tronçon de transition (13) se prolonge directement par les tronçons de profilé (11, 12).

10. Bâti suivant l'une quelconque des revendications 1. 3, 7 ou 9,
caractérisé en ce que les extrémités des tronçons de profilé (11, 12) qui sont opposées au tronçon de transition (13) sont reliées par l'intermédiaire de deux tronçons terminaux (20,21; 29,30) cintrés chacun à angle droit vers l'intérieur.

11. Bâti suivant l'une quelconque des revendications de 1 à 10,
caractérisé
en ce que les tronçons terminaux (20,21; 29,30) et/ou le tronçons de transition (28) présentent des séries de logements de fixation (22,23; 33,34; 31,32).

12. Bâti suivant l'une quelconque des revendications de 1 à 11,
caractérisé
en ce que les tronçons de transition (13) des branches d'encadrement (10) présentent des logements de fixation (34).
